(19) Europäisches Patentamt
European Patent Office
Office européen des brevets

(11) **EP 4 557 784 A1**

(12) **EUROPEAN PATENT APPLICATION**
published in accordance with Art. 153(4) EPC

(43) Date of publication:
21.05.2025 Bulletin 2025/21

(51) International Patent Classification (IPC):
*H04W 4/30* (2018.01)

(21) Application number: 23909371.9

(52) Cooperative Patent Classification (CPC):
H04L 67/12; H04Q 9/00; H04W 4/30

(22) Date of filing: 19.09.2023

(86) International application number:
PCT/CN2023/119810

(87) International publication number:
WO 2024/139436 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 CN 202211700244

(71) Applicant: ZTE Corporation
Shenzhen, Guangdong 518057 (CN)

(72) Inventors:
• BIAN, Luanjian
  Shenzhen, Guangdong 518057 (CN)
• DAI, Bo
  Shenzhen, Guangdong 518057 (CN)
• HU, Youjun
  Shenzhen, Guangdong 518057 (CN)
• LIU, Kun
  Shenzhen, Guangdong 518057 (CN)

(74) Representative: Aipex B.V.
Vestdijk 51
5611 CA Eindhoven (NL)

(54) **INSTRUCTION SENDING METHOD, INSTRUCTION RECEIVING METHOD, COMMUNICATION NODE, AND STORAGE MEDIUM**

(57) Provided are a command sending method, a command receiving method, a communication node, and a storage medium. The command sending method includes sending a first polling command or a second polling command, where the first polling command includes a first command index and a first polling parameter, the first polling parameter is configured for determining the first range of the slot values, the second polling command includes a second command index and a second polling parameter, and the second polling parameter is configured for determining the second range of the slot values (S110).

Send a first polling command or a second polling command, where the first polling command includes a first command index and a first polling parameter, the first polling parameter is configured for determining the first range of slot values, the second polling command includes a second command index and a second polling parameter, and the second polling parameter is configured for determining the second range of the slot values — S110

**FIG. 2**

EP 4 557 784 A1

## Description

TECHNICAL FIELD

The present application relates to the field of communication technology, for example, a command sending method, a command receiving method, a communication node, and a storage medium.

BACKGROUND

In passive IoT communication technology, a first communication node typically needs to actively initiate a request command to acquire information from a second communication node. That is, the second communication node can only feedback the corresponding information to the first communication node after receiving the request command. However, the method of the first communication node initiating a request command to acquire information from the second communication node often lacks a certain degree of timeliness. With the continuous expansion of the application scope of passive IoT, some scenarios may require the second communication node to actively report information so that users can promptly acquire the status of items monitored by the second communication node and then grasp the status changes of items or perform corresponding operations and controls based on the real-time status. For example, in agricultural scenarios, the second communication node may actively report information such as crop fertilizers and soil moisture to the first communication node when the crop fertilizers and soil moisture are monitored to be insufficient. This information is then relayed to the users so that after acquiring the information, the users can perform relevant processing in time to ensure a benign growth environment for crops. However, passive IoT currently does not support the functionality for the second communication node to actively report information.

SUMMARY

An embodiment of the present application provides a command sending method. The command sending method is applied to a first communication node and includes the following:

A first polling command or a second polling command is sent, where the first polling command includes a first command index and a first polling parameter, the first polling parameter is configured for determining a first range of slot values, the second polling command includes a second command index and a second polling parameter, and the second polling parameter is configured for determining a second range of the slot values.

An embodiment of the present application provides a command receiving method. The command receiving method is applied to a second communication node and includes the following:

A first polling command or a second polling command sent by a first communication node is received, where the first polling command includes a first command index and a first polling parameter, the first polling parameter is configured for determining a first range of slot values, the second polling command includes a second command index and a second polling parameter, and the second polling parameter is configured for determining a second range of the slot values.

An embodiment of the present application provides a communication node. The communication node includes a processor that, when executing a computer program, implements the command sending method or command receiving method of any of the preceding embodiments.

An embodiment of the present application also provides a computer-readable storage medium storing a computer program that, when executed by a processor, implements the command sending method or command receiving method of any of the preceding embodiments.

BRIEF DESCRIPTION OF DRAWINGS

FIG. 1 is a diagram illustrating the networking of a wireless communication system according to an embodiment.
FIG. 2 is a flowchart of a command sending method according to an embodiment.
FIG. 3 is a flowchart of a command receiving method according to an embodiment.
FIG. 4 is a diagram of command interaction according to an embodiment.
FIG. 5 is a diagram of another command interaction according to an embodiment.
FIG. 6 is a diagram of another command interaction according to an embodiment.
FIG. 7 is a diagram of another command interaction according to an embodiment.
FIG. 8 is a diagram illustrating the structure of a command sending apparatus according to an embodiment.
FIG. 9 is a diagram illustrating the structure of another command sending apparatus according to an embodiment.
FIG. 10 is a diagram illustrating the structure of a command receiving apparatus according to an embodiment.
FIG. 11 is a diagram illustrating the structure of another command receiving apparatus according to an embodiment.
FIG. 12 is a diagram illustrating the structure of another command receiving apparatus according to an embodiment.
FIG. 13 is a diagram illustrating the structure of a base station according to an embodiment.
FIG. 14 is a diagram illustrating the structure of a UE according to an embodiment.

DETAILED DESCRIPTION

The embodiments described herein are only intended to explain the present application. Embodiments of the present application are described hereinafter in detail in conjunction with drawings.

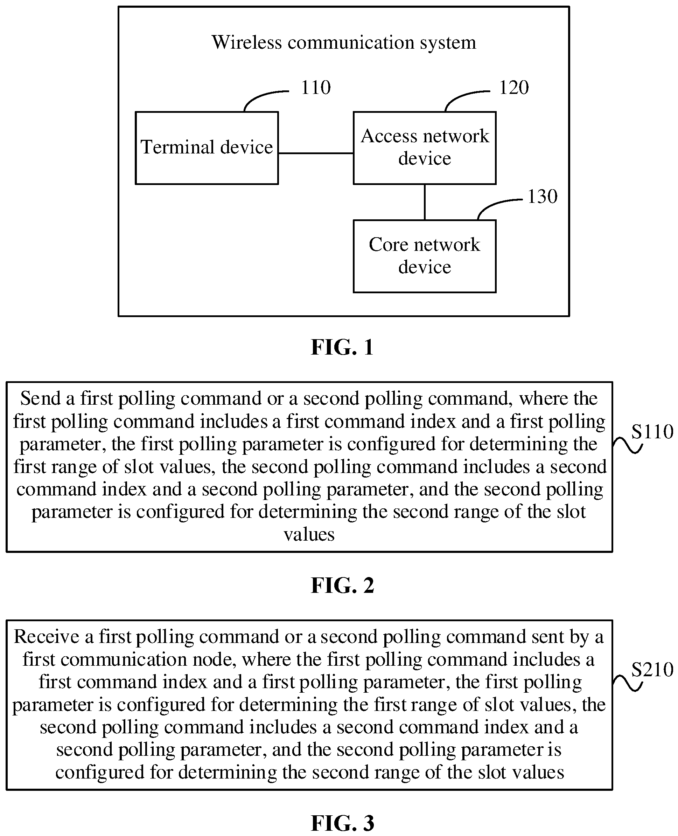

The command sending method and command receiving method according to the present application may be applied to various types of wireless communication systems, such as a Long-Term Evolution (LTE) system, a 4th-generation mobile communication technology (4G) system, a 5th-generation mobile communication technology (5G) system, an LTE and 5G hybrid architecture system, a 5G New Radio (NR) system, and a new communication system emerging in future communication development, for example, a 6th-generation mobile communication technology (6G) system. FIG. 1 is a diagram illustrating the networking of a wireless communication system according to an embodiment. As shown in FIG. 1, the wireless communication system includes a terminal device 110, an access network device 120, and a core network device 130.

The terminal device 110 may be a device having radio transceiving functions. The device may be deployed on land (such as being indoor or outdoor, handled, wearable, or vehicle-mounted); may be deployed on water (such as in ships); and may also be deployed in the air (such as in airplanes, balloons, and satellites). Examples of some terminal devices 110 are as follows: a wireless terminal, user equipment (UE), a mobile phone, a mobile station, a tablet computer, a notebook computer, an ultra-mobile personal computer (UMPC), a handheld computer, a netbook, a personal digital assistant (PDA), and other user equipment that can be networked; a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home; an IoT node in the Internet of Things (IoT); an in-vehicle communication apparatus in the Internet of Vehicles; an entertainment and game device or system; or a global positioning system device. The embodiments of the present application do not limit the technology and the device configuration used by the terminal device 110. Additionally, the terminal device 110 may be referred to as a terminal.

The access network device 120 is an access device through which the terminal device 110 wirelessly accesses the wireless communication system. The access network device 120 may be a reader/writer, a base station, an evolved base station (evolved NodeB, eNB, or eNodeB) in Long Term Evolution Advanced (LTE-A), a transmission reception point (TRP), a base station in the 5G mobile communication system, a next generation base station (next generation NodeB or gNB), a base station in a future mobile communication system, or an access node in a Wireless Fidelity (Wi-Fi) system. The base station may include various network-side devices such as a macro base station, a micro base station, a Home Node B, a radio remote, a router, a Wi-Fi device, or a primary cell and a secondary cell, and location management function (LMF) devices. The access network device 120 may also be a module or unit that performs part of functions of a base station, for example, a central unit (CU) or a distributed unit (DU). The embodiments of the present application do not limit the technology and the device configuration used by the access network device 120. Additionally, the access network device 120 may be referred to as a base station.

The core network device 130 may include an access and mobility management network element and a session management network element. Illustratively, the terminal device 110 may access the core network through the access network device 120, thereby enabling data transmission.

In an embodiment of the present application, a command sending method, a command receiving method, a communication node, and a storage medium that can be run in the preceding wireless communication systems are provided, which can enable a second communication node to actively report information to a first communication node.

The command sending method, the command receiving method, the communication node, and the technical effects thereof are described below.

FIG. 2 is a flowchart of a command sending method according to an embodiment. As shown in FIG. 2, the method provided in this embodiment is applied to a first communication node. In this example, the first communication node (which may also be referred to as a first communication node device) may be a base station, and the second communications node (which may also be referred to as a second communication node device) may be a terminal device. The method includes S110.

In S110, a first polling command or a second polling command is sent, where the first polling command includes a first command index and a first polling parameter, the first polling parameter is configured for determining a first range of slot values, the second polling command includes a second command index and a second polling parameter, and the second polling parameter is configured for determining a second range of the slot values.

The first command index and the second command index are used for the second communication node to determine the first polling command and the second polling command, respectively so that the second communication node, after receiving the first polling command or the second polling command, can actively send reporting information or the identification of the second communication node to the first communication node. A second communication node without a need for actively reporting information may consider the first polling command or the second polling command invalid.

The first polling parameter and the second polling parameter may generally be integers greater than or equal to 0.

In an embodiment, the first command index and the second command index are different from each other.

In an embodiment, the first polling command is a command sent periodically, and the transmission period of the first polling command is T.

In an embodiment, the duration corresponding to the first range of the slot values is less than or equal to T.

In an embodiment, the sum of the duration corresponding to the first range of the slot values and the duration corresponding to the second range of the slot values is less than or equal to T.

In an embodiment, the first polling command also includes at least one of the following: a period indication, control information, and indication information about a second communication node set.

The period indication is used to indicate the transmission period of the first polling command. The control information is configured for uplink data transmission and includes at least one of the following: code rate, number of repetitions, a modulation mode, a frequency domain position, and an extended sequence index. The second communication node may send reporting information based on the control information. The indication information about a second communication node set corresponds to a second communication node set, and a second communication node belonging to the second communication node set may send reporting information. The second communication node with a reporting requirement in the second communication node set sends reporting information.

In an embodiment, after S110 is executed, the method may also include the following: receiving reporting information sent by a second communication node, where the reporting information includes the identification of the second communication node and first data; in the case where the first data is correctly decoded, sending first response information to the second communication node, where the first response information includes at least one of correct decoding indication information, first command information, or the identification of the second communication node.

In an embodiment, after S110 is executed, the method may also include the following: receiving the identification of the second communication node sent by a second communication node; in the case where the identification of the second communication node is correctly decoded, sending acknowledgment information including the identification of the second communication node to the second communication node; receiving first data sent by the second communication node; in the case where the first data is correctly decoded, sending first response information to the second communication node, where the first response information includes at least one of correct decoding indication information, first command information, or the identification of the second communication node. In an embodiment, in the case where the first data is not correctly decoded, second response information is sent to the second communication node, where the second response information includes at least one of an incorrect decoding indication, the identification of the second communication node, a retransmission indication, or retransmission control information.

The identification of the second communication node is used to identify the second communication node. The identification of the second communication node may be a bit sequence having a length N. The identification of the second communication node may be a randomly generated bit sequence or a unique bit sequence for each second communication node.

The first data carries the content that the second communication node needs to report.

In an embodiment, if the command sent to the second communication node is the second polling command, before S110 is executed, the method also includes sending the first polling command; receiving the identification of the second communication node or reporting information sent by the second communication node, where the identification of the second communication node or the reporting information is not correctly decoded.

FIG. 3 is a flowchart of a command receiving method according to an embodiment. As shown in FIG. 3, the method provided in this embodiment is applied to a second communication node. In this example, the first communication node (which may also be referred to as a first communication node device) may be a base station, and the second communications node (which may also be referred to as a second communication node device) may be a terminal device. The method includes S210.

In S210, a first polling command or a second polling command sent by a first communication node is received, where the first polling command includes a first command index and a first polling parameter, the first polling parameter is configured for determining the first range of the slot values, the second polling command includes a second command index and a second polling parameter, and the second polling parameter is configured for determining a second range of the slot values.

The first command index and the second command index are used for the second communication node to determine the first polling command and the second polling command, respectively so that the second communication node, after receiving the first polling command or the second polling command, can actively send reporting information or the identification of the second communication node to the first communication node. A second communication node without a need for actively reporting information may consider the first polling command or the second polling command invalid.

The first polling parameter and the second polling parameter may generally be integers greater than or equal to 0.

In an embodiment, after S210 is executed, the method also includes determining the first range of the slot values according to a first coefficient and the first polling parameter; or determining the second range of the slot values according to the second polling parameter.

That is, if the command received from the first communication node in S210 is the first polling command, the first range of the slot values is determined according to the first coefficient and the first polling parameter; if the command received from the first communication node in S210 is the second polling command, the second range of the slot values is determined according to the second polling parameter.

In an embodiment, the methods for determining the first range of the slot values according to the first coefficient and the first polling parameter may include any one of the following two methods:

> Method 1: The maximum slot value S1 corresponding to the first polling parameter Q1 is determined. The first range of the slot values is determined as 0 to $\lceil k \cdot S1 \rceil$ according to the first coefficient k and the maximum slot value S1, where $0 < k \leq 1$.
>
> Method 2: The maximum slot value $S1 = \lceil k \cdot 2^{Q1} \rceil - 1$ corresponding to the first polling parameter Q1 is determined according to the first coefficient k and the first polling parameter Q1. The first range of the slot values is determined as 0 to S1, where $0 < k \leq 1$.

In an embodiment, the value of the first coefficient k is associated with n, n denotes the number of times the second communication node receives the first polling command to send a piece of reporting information or the identification of the second communication node, and $n \geq 1$. For example, when n is 1, k = 1. As n increases, the value of k decreases or remains unchanged. For example, when n is 2 or 4, k is equal to 1/2. Another example is that when n is 4 or 8, k is equal to 1/4.

Alternatively, the value of the first coefficient k is associated with the data volume of the first data. For example, as the data volume of the first data decreases, the value of k decreases or remains unchanged; or as the data volume of the first data increases, the value of k decreases or remains unchanged.

Alternatively, the value of the first coefficient k is associated with the service type corresponding to first data. For example, the value of k is small under a high-priority service type, and the value of k is large under a low-priority service type. The service type may include at least one of inventory, positioning, or information collection.

Alternatively, the value of the first coefficient k is associated with whether the second communication node has an active reporting requirement. For example, if the second communication node has an active reporting requirement, the value of k is less than 1; otherwise, the value of k is equal to 1.

Alternatively, the value of the first coefficient k is associated with mobility speed of the second communication node. For example, when the mobility speed is 0, the k value is 1, and as the mobility speed increases, the value of k decreases or remains unchanged.

In an embodiment, the method for determining the second range of the slot values according to the second polling parameter includes determining the maximum slot value S2 corresponding to the second polling parameter Q2; determining the second range of the slot values as 0 to S2.

In an embodiment, after S210 is executed, the method also includes sending the identification of the second communication node or reporting information to the first communication node, where the reporting information includes the identification of the second communication node and first data. The second communication node randomly selects a slot value within the first range of the slot values or the second range of the slot values and sends the identification of the second communication node or reporting information to the first communication node in the slot corresponding to the selected slot value.

In an embodiment, if the reporting information is sent to the first communication node, after sending the reporting information to the first communication node, in the case where first response information including the identification of the second communication node is not received from the first communication node, but the second polling command is received from the first communication node, the reporting information is resent based on the second polling command; alternatively, if the identification of the second communication node is sent to the first communication node, after sending the identification of the second communication node to the first communication node, in the case where acknowledgment information including the identification of the second communication node is not received from the first communication node, but the second polling command is received from the first communication node, the identification of the second communication node is resent based on the second polling command.

In an embodiment, if the reporting information is sent to the first communication node, after sending the reporting information to the first communication node, in the case where first response information including the identification of the second communication node is not received from the first communication node and the second polling command is not received from the first communication node, the reporting information is resent based on the first polling command after receiving a next first polling command sent by the first communication node; alternatively, if the identification of the second communication node is sent to the first communication node, after sending the identification of the second communication node to the first communication node, in the case where acknowledgment information including the identification of the second communication node is not received from the first communication node and the second polling command is not received from the first communication node, the identification of the second communication node is resent based on the first polling command after receiving a next first polling command sent by the first communication node.

In an embodiment, after sending the identification of the second communication node to the first communication node, the method may also include receiving acknowledgment information including the identification of the second communication node from the first communication node; if the identification of the second communication node contained in the acknowledgment information is the same as the identification stored in the second communication node, sending first data to the first communication node; receiving second response information sent by the first communication node, and resending the first data after a delay value D starting from transmission end time of the second response information, where the second response information includes at least one of incorrect decoding indication information, the identification of the second communication node, a retransmission indication, or retransmission control information.

In an embodiment, for an $(m - 1)$-th transmission failure of a piece of reporting information or the identification of the second communication node, the second communication node sends the reporting information or the identification of the second communication node based on the first polling command after receiving the first polling command for $m$-th time. For example, when the second communication node fails to send the reporting information for the first time, the second communication node sends the reporting information based on the first polling command received for the second time after receiving the first polling command for the second time; when the second communication node fails to send the reporting information for the second time, the second communication node sends the reporting information based on the first polling command received for the third time after receiving the first polling command for the third time, and so on. Sending the reporting information or the identification of the second communication node based on the first polling command received for the n-th time includes: randomly selecting a slot value within the first range of the slot values corresponding to the first polling command received for the n-th time to send the reporting information or the identification of the second communication node.

In combination with the preceding embodiments, it can be seen that the command sent by the first communication node to the second communication node is the first polling command or the second polling command, and what is sent by the second communication node to the first communication node is the identification of the second communication node or reporting information (including the identification of the second communication node and the first data). That is, the following cases may be included: 1. The command sent by the first communication node to the second communication node is the first polling command, and the second communication node sends the reporting information to the first communication node. 2. The command sent by the first communication node to the second communication node is the first polling command, and the second communication node sends the identification of the second communication node to the first communication node. 3. The command sent by the first communication node to the second communication node is the second polling command, and the second communication node sends the reporting information to the first communication node. 4. The command sent by the first communication node to the second communication node is the second polling command, and the second communication node sends the identification of the second communication node to the first communication node. A total of 4 cases are provided.

For ease of understanding, some example embodiments are listed below to explain the preceding four cases. In the following example embodiments, examples are used for description where the first communication node is a base station and the second communication node is a UE.

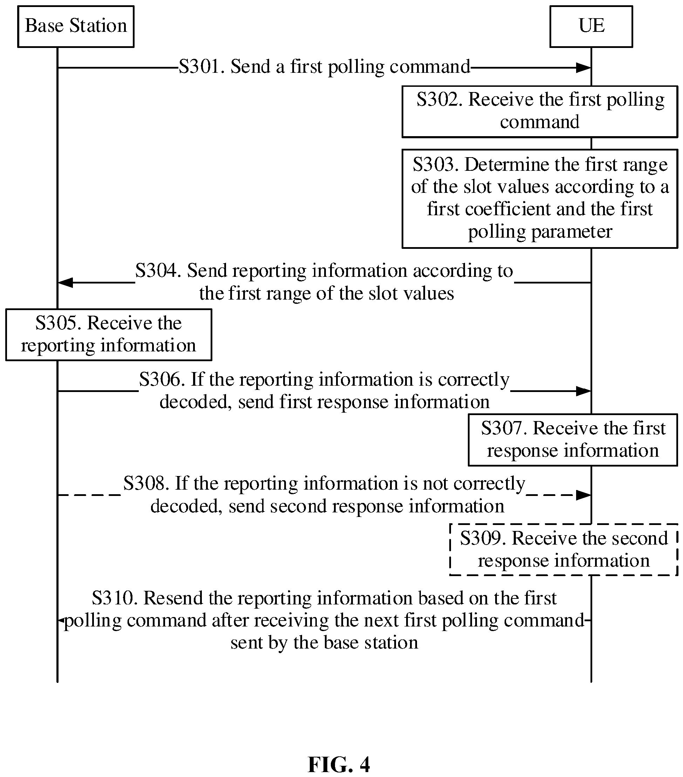

In a first example embodiment, FIG. 4 is a diagram of command interaction according to an embodiment. As shown in FIG. 4, the method includes S301 to S310.

In S301, a base station sends a first polling command to a UE.

The first polling command includes a first command index and a first polling parameter. The first polling parameter is used to determine the first range of the slot values.

In an embodiment, the first polling command also includes at least one of the following: a period indication, control information, and indication information about a UE set.

The period indication is used to indicate the transmission period of the first polling command. The control information is for uplink data transmission and includes at least one of the following: code rate, number of repetitions, a modulation mode, a frequency domain position, and an extended sequence index. The UE may send reporting information based on the control information. The indication information about a UE set corresponds to a UE set, and a UE belonging to the UE set may send reporting information. The UE with a reporting requirement in the UE set sends reporting information.

In S302, the UE receives the first polling command sent by the base station.

In S303, the UE determines the first range of the slot values according to a first coefficient and the first polling parameter.

In S304, the UE sends reporting information to the base station according to the first range of the slot values, where the reporting information includes the identification of the UE and first data.

The UE randomly selects a slot value within the first range of the slot values and sends reporting information to the base station in the slot corresponding to the selected slot value.

In this example, the frequency domain position used by the UE to send the reporting information is a default frequency domain position or is indicated by the first polling command or another command.

In S305, the base station receives the reporting information sent by the UE.

After receiving the reporting information sent by the UE, the base station first decodes the reporting information.

In S306, if the reporting information is correctly decoded, the base station sends first response information to the UE.

The first response information includes at least one of correct decoding indication information, first command information, or the identification of the UE.

The correct decoding indication information is used to indicate that the reporting information has been correctly decoded.

The first command information is used to instruct the UE to perform the next operation. In an embodiment, the first command information may include a sleep command to instruct the UE to enter a sleep state of duration M. For example, in the sleep state, the UE may turn off the uplink signal transmission function or the downlink information detection function.

The identification of the UE is used to identify the UE. If the identification stored in the UE is the same as the identification of the UE contained in the first response information, it can be determined that the sent reporting information is correctly decoded so that the UE stops sending the reporting information.

In S307, the UE receives the first response information sent by the base station.

In an embodiment, after the UE receives the first response information sent by the base station, if the identification stored in the UE is the same as the identification of the UE contained in the first response information, and the first response information includes a sleep command, the UE may turn off the signal receiving and transmitting functions within the duration M to save resources.

It should be added that when a UE sends reporting information, conflicts may occur with information sent by other UEs (that is, multiple UEs send signals on the same frequency resource at the same time), thereby causing the base station to fail in correctly decoding the reporting information. Alternatively, when the channel condition is poor, the base station cannot correctly decode the reporting information. In the case where the reporting information is not correctly decoded, the following two cases of S308 to 310 or S310 may be included:

In S308, if the reporting information is not correctly decoded, the base station sends second response information to the UE.

The second response information includes at least one of an incorrect decoding indication, the identification of the UE, a retransmission indication, or retransmission control information.

In S309, the UE receives the second response information sent by the base station.

In S310, the UE resends the reporting information based on the first polling command after receiving the next first polling command sent by the base station.

If the UE receives the second response information within a time window P or does not receive the first response information including the identification of the UE itself, then the UE resends the reporting information based on the first polling command after receiving the next first polling command sent by the base station. That is, within the first range of the slot values corresponding to the first polling command, a slot value is randomly selected to send the reporting information.

Randomly selecting a slot value to send the reporting information includes the operations. The UE uses the selected slot value as the slot count value, receives a slot decrement command to decrement the slot count value, or decrements the slot count value based on the clock of the UE. When the slot count value of the UE reaches 0, the reporting information is sent.

In this example, the slot value may be a count value, and the range of the value of the slot may be a range of count values. The description of the slot value is also applied to other embodiments.

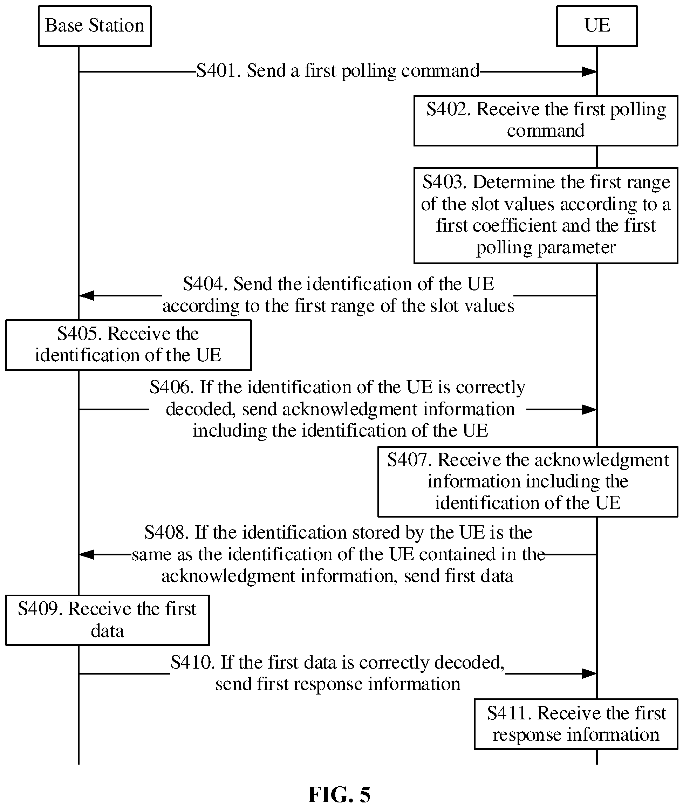

In a second example embodiment, FIG. 5 is a diagram of another command interaction according to an embodiment. As shown in FIG. 5, the method includes S401 to S411.

In S401, a base station sends a first polling command to a UE.

The first polling command includes a first command index and a first polling parameter. The first polling parameter is used to determine the first range of the slot values.

In an embodiment, the first polling command also includes at least one of the following: a period indication, control information, and indication information about a UE set.

The period indication is used to indicate the transmission period of the first polling command. The control information is for uplink data transmission and includes at least one of the following: code rate, number of repetitions, a modulation mode, a frequency domain position, and an extended sequence index. The UE may send the identification of the UE based on the control information. The indication information about a UE set corresponds to a UE set, and a UE belonging to the UE set may send the identification of the UE. The UE with a reporting requirement in the UE set sends the identification of the UE.

In S402, the UE receives the first polling command sent by the base station.

In S403, the UE determines the first range of the slot values according to a first coefficient and the first polling parameter.

In S404, the UE sends the identification of the UE to the base station according to the first range of the slot values.

The UE randomly selects a slot value within the first range of the slot values and sends the identification of the UE to the base station in the slot corresponding to the selected slot value.

In this example, the frequency domain position used by the UE to send the identification of the UE is a default frequency domain position or is indicated by the first polling command or another command.

In S405, the base station receives the identification of the UE sent by the UE.

In S406, if the identification of the UE is correctly decoded, the base station sends acknowledgment information including the identification of the UE to the UE.

In S407, the UE receives the acknowledgment information including the identification of the UE sent by the base station.

In S408, if the identification stored by the UE is the same as the identification of the UE contained in the acknowledgment information, the UE sends first data to the base station.

The first data may carry the content that the UE needs to report.

In S409, the base station receives the first data sent by the UE.

The base station receives the first data sent by the UE and decodes the first data.

In S410, if the first data is correctly decoded, the base station sends first response information to the UE.

The first response information includes at least one of correct decoding indication information, first command information, or the identification of the UE.

The correct decoding indication information is used to indicate that the first data has been correctly decoded.

The first command information is used to instruct the UE to perform the next operation. In an embodiment, the first command information may include a sleep command to instruct the UE to enter a sleep state of duration M. For example, in the sleep state, the UE may turn off the uplink signal transmission function or the downlink information detection function.

The identification of the UE is used to identify the UE. If the identification stored in the UE is the same as the identification of the UE contained in the first response information, it can be determined that the sent first data is correctly decoded so that the UE stops sending the first data.

In S411, the UE receives the first response information sent by the base station.

In an embodiment, after the UE receives the first response information sent by the base station, if the identification stored in the UE is the same as the identification of the UE contained in the first response information, and the first response information includes a sleep command, the UE may turn off the signal receiving and transmitting functions within the duration M to save resources.

In this embodiment, in the case where the base station fails to correctly decode the identification of the UE or the first data, the following two cases are included:

Case 1:

In an embodiment, if the first data is not correctly decoded, the base station may send second response information to the UE.

The second response information includes at least one of an incorrect decoding indication, the identification of the UE, a retransmission indication, or retransmission control information. The incorrect decoding indication is used to indicate that the first data is not correctly decoded. The retransmission indication is used to instruct the UE to resend the first data. The retransmission control information is used to indicate the configuration used by the UE to resend the first data. The configuration includes at least one of the following: code rate, a modulation mode, number of repetitions, a time domain position, a frequency domain position, or an extended sequence index.

In an embodiment, after receiving the second response information sent by the base station, the UE that sends the first data starts to resend the first data after a delay value D, starting from the end time of the second response information transmission.

Alternatively, if the UE does not receive the first response information within a time window P after sending the first data, the UE resends the first data after a delay value E, starting from the end time of the first data transmission, where E is greater than or equal to P.

Case 2:

In an embodiment, in the case where the base station fails to correctly decode the identification of the UE, the base station may send an incorrect decoding indication.

In an embodiment, after the UE sends the identification of the UE, if the UE receives an incorrect decoding indication within a time window P, or if the UE fails to receive acknowledgment information including the identification of the UE itself, the UE resends the identification of the second communication node based on the first polling command after receiving the next first polling command, that is, within the first range of the slot values corresponding to the first polling command, the UE randomly selects a slot value to send the identification of the UE.

Randomly selecting a slot value to send the identification of the UE includes the following: The UE uses the selected slot value as the slot count value, receives a slot decrement command to decrement the slot count value, or decrements the slot count value based on the clock of the UE. When the slot count value of the UE reaches 0, the identification of the UE is sent.

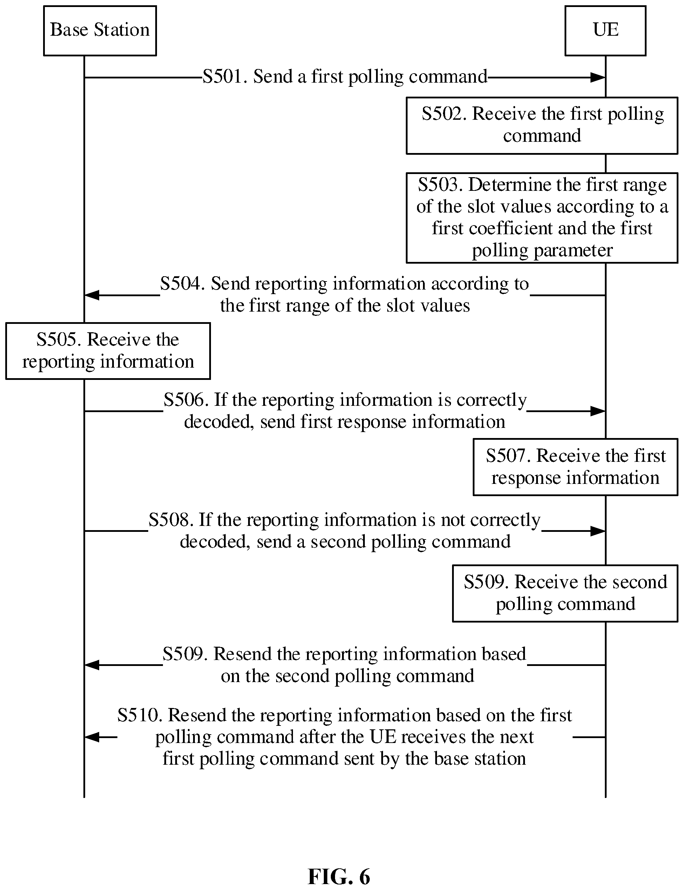

In a third example embodiment, FIG. 6 is a diagram of another command interaction according to an embodiment. As shown in FIG. 6, the method includes S501 to S510.

In S501, a base station sends a first polling command to a UE.

The first polling command includes a first command index and a first polling parameter. The first polling parameter is used to determine the first range of the slot values.

In an embodiment, the first polling command also includes at least one of the following: a period indication, control information, and indication information about a UE set.

The period indication is used to indicate the transmission period of the first polling command. The control information is for uplink data transmission and includes at least one of the following: code rate, number of repetitions, a modulation mode, a frequency domain position, and an extended sequence index. The UE may send reporting information based on the control information. The indication information about a UE set corresponds to a UE, and a UE belonging to the UE set may send reporting information. The UE with a reporting requirement in the UE set sends reporting information.

In S502, the UE receives the first polling command sent by the base station.

In S503, the UE determines the first range of the slot values according to a first coefficient and the first polling parameter.

In S504, the UE sends reporting information to the base station according to the first range of the slot values, where the reporting information includes the identification of the UE and first data.

The UE randomly selects a slot value within the first range of the slot values and sends reporting information to the base station in the slot corresponding to the selected slot value.

In this example, the frequency domain position used by the UE to send the reporting information is a default frequency domain position or is indicated by the first polling command or another command.

In S505, the base station receives the reporting information sent by the UE.

In S506, if the reporting information is correctly decoded, the base station sends first response information to the UE.

The first response information includes at least one of correct decoding indication information, first command information, or the identification of the UE.

The correct decoding indication information is used to indicate that the reporting information has been correctly decoded.

The first command information is used to instruct the UE to perform the next operation. In an embodiment, the first command information may include a sleep command to instruct the UE to enter a sleep state of duration M. For example, in the sleep state, the UE may turn off the uplink signal transmission function or the downlink information detection function.

The identification of the UE is used to identify the UE. If the identification stored in the UE is the same as the identification of the UE contained in the first response information, it can be determined that the sent reporting information is correctly decoded so that the UE stops sending the reporting information.

In S507, the UE receives the first response information sent by the base station.

In an embodiment, after the UE receives the first response information sent by the base station, if the identification stored in the UE is the same as the identification of the UE contained in the first response information, and the first response information includes a sleep command, the UE may turn off the signal receiving or transmitting functions within the duration M. For example, in the sleep state, the UE may turn off the uplink signal transmission function or the downlink information detection function.

In the embodiment, in the case where the base station does not correctly decode the reporting information, the following two cases of S508 to 509 or S510 may be included:

In S508, if the reporting information is not correctly decoded, the base station sends a second polling command to the UE.

The second polling command includes a second command index and a second polling parameter. The second polling parameter is used to determine the second range of the slot values.

In S509, the UE receives the second polling command sent by the base station and resends the reporting information based on the second polling command.

After receiving the second polling command sent by the base station, the UE determines the second range of the slot values according to the second polling parameter. The maximum slot value S2 corresponding to the second polling parameter Q2 is determined. For example, $S2 = 2^{Q2} - 1$. The second range of the slot values is determined to be from 0 to S2. Within the second range of the slot values, the UE randomly selects a slot value to resend the reporting information.

In S510, the UE resends the reporting information based on the first polling command after receiving the next first polling command sent by the base station.

After sending the reporting information, if the UE does not receive first response information including the identification of the UE itself and does not receive the second polling command, the UE resends the reporting information based on the first polling command after receiving the next first polling command, that is, within the first range of the slot values corresponding to the first polling command, the UE randomly selects a slot value to send the reporting information.

In this embodiment, randomly selecting a slot value to send the reporting information includes the following: The UE uses the selected slot value as the slot count value, receives a slot decrement command to decrement the slot count value, or decrements the slot count value based on the clock of the UE. When the slot count value of the UE reaches 0, the reporting information is sent.

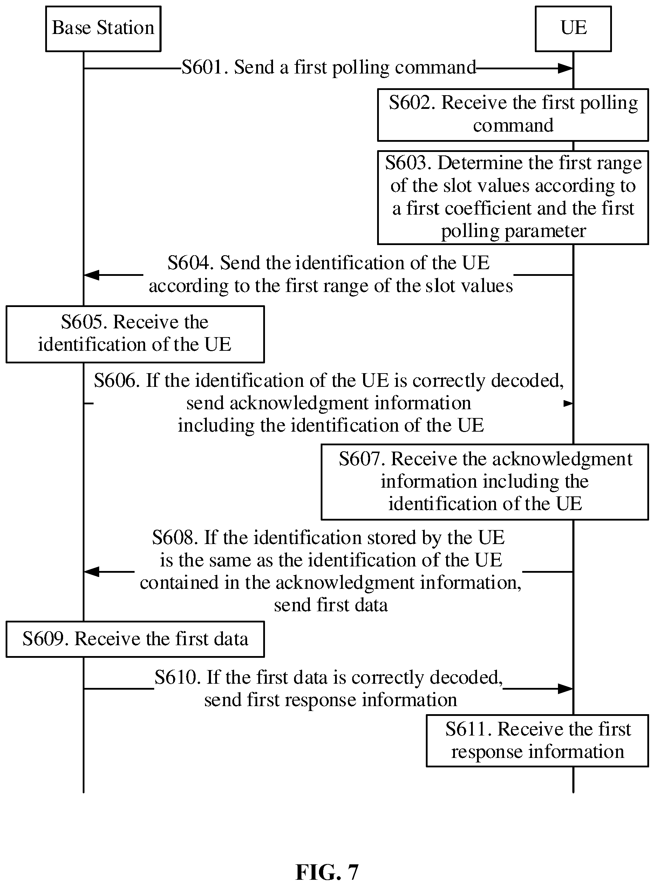

In a fourth example embodiment, FIG. 7 is a diagram of another command interaction according to an embodiment. As shown in FIG. 7, the method includes S601 to S611.

In S601, a base station sends a first polling command to a UE.

The first polling command includes a first command index and a first polling parameter. The first polling parameter is used to determine the first range of the slot values.

In an embodiment, the first polling command also includes at least one of the following: a period indication, control information, and indication information about a UE set.

The period indication is used to indicate the transmission period of the first polling command. The control information is for uplink data transmission and includes at least one of the following: code rate, number of repetitions, a modulation mode, a frequency domain position, and an extended sequence index. The UE may send the identification of the UE based on the control information. The indication information about a UE set corresponds to a UE set, and a UE belonging to the UE set may send the identification of the UE. The UE with a reporting requirement in the UE set sends the identification of the UE.

In S602, the UE receives the first polling command sent by the base station.

In S603, the UE determines the first range of the slot values according to a first coefficient and the first polling parameter.

In S604, the UE sends the identification of the UE to the base station according to the first range of the slot values.

The UE randomly selects a slot value within the first range of the slot values and sends the identification of the UE to the base station in the slot corresponding to the selected slot value.

In this example, the frequency domain position used by the UE to send the identification of the UE is a default frequency domain position or is indicated by the first polling command or another command.

In S605, the base station receives the identification of the UE sent by the UE.

In S606, if the identification of the UE is correctly decoded, the base station sends acknowledgment information including the identification of the UE to the UE.

In S607, the UE receives the acknowledgment information including the identification of the UE sent by the base station.

In S608, if the identification stored by the UE is the same as the identification of the UE contained in the acknowledgment information, the UE sends first data to the base station.

The first data may carry the content that the UE needs to report.

In S609, the base station receives the first data sent by the UE.

The base station receives the first data sent by the UE and decodes the first data.

In S610, if the first data is correctly decoded, the base station sends first response information to the UE.

The first response information includes at least one of correct decoding indication information, first command information, or the identification of the UE.

The correct decoding indication information is used to indicate that the first data has been correctly decoded.

The first command information is used to instruct the UE to perform the next operation. In an embodiment, the first command information may include a sleep command to instruct the UE to enter a sleep state of duration M. For example, in the sleep state, the UE may turn off the uplink signal transmission function or the downlink information detection function.

The identification of the UE is used to identify the UE. If the identification stored in the UE is the same as the identification of the UE contained in the first response information, it can be determined that the sent first data is correctly decoded so that the UE stops sending the first data.

In S611, the UE receives the first response information sent by the base station.

In an embodiment, after the UE receives the first response information sent by the base station, if the identification stored in the UE is the same as the identification of the UE contained in the first response information, and the first response information includes a sleep command, the UE may turn off the signal receiving or transmitting functions within the duration M. For example, in the sleep state, the UE may turn off the uplink signal transmission function or the downlink information detection function.

In this embodiment, in the case where the base station fails to correctly decode the identification of the UE or the first data, the following two cases are included:

Case 1:

In an embodiment, if the first data is not correctly decoded, the base station may send second response information to the UE.

The second response information includes at least one of an incorrect decoding indication, the identification of the UE, a retransmission indication, or retransmission control information. The incorrect decoding indication is used to indicate that the first data is not correctly decoded. The retransmission indication is used to instruct the UE to resend the first data. The retransmission control information is used to indicate the configuration used by the UE to resend the first data. The configuration includes at least one of the following: code rate, a modulation mode, number of repetitions, a time domain position, a frequency domain position, or an extended sequence index.

In an embodiment, after receiving the second response information sent by the base station, the UE that sends the first data starts to resend the first data after a delay value D, starting from the end time of the second response information transmission.

Alternatively, if the UE does not receive the first response information within a time window P after sending the first data, the UE resends the first data after a delay value E, starting from the end time of the first data transmission, where E is greater than or equal to P.

In an example, the UE may resend the first data by repeated transmission, that is, the first data is sent after being repeated R times, where R is greater than or equal to 1.

Case 2:

In an embodiment, in the case where the base station fails to correctly decode the identification of the UE, the base station may send a second polling command. The second polling command includes a second command index and a second polling parameter. The second polling parameter is used to determine the second range of the slot values.

After sending the identification of the UE, if the UE does not receive acknowledgment information including the identification of the UE itself, but receives the second polling command, the UE resends the identification of the UE based on the second polling command.

After receiving the second polling command, the UE determines the second range of the slot values according to the Q value contained in the second polling command, which includes determining the corresponding maximum slot value S2 according to the Q value. For example, $S2 = 2^{Q2} - 1$, so as to determine that the second range of the slot values is from 0 to S2. Within the second range of the slot values, the UE randomly selects a slot value to send the identification of the UE.

In an embodiment, after the UE sends the identification of the UE, if the UE fails to receive acknowledgment information including the identification of the UE itself and fails to receive the second polling command, the UE resends the identification of the UE based on the first polling command after receiving the next first polling command, that is, within the first range of the slot values corresponding to the first polling command, the UE randomly selects a slot value to send the identification of the UE.

In the embodiment, randomly selecting a slot value to send the identification of the UE includes the following operations. The UE uses the selected slot value as the slot count value, receives a slot decrement command to decrement the slot count value, or decrements the slot count value based on the clock of the UE. When the slot count value of the UE reaches 0, the identification of the UE is sent.

The present application also provides an information sending method. The method includes the following: A first communication node sends a first multicast command.

The first multicast command includes a multicast command index, L second communication node identifications, and an operation command index set; where the multicast command index corresponds to the first multicast command, and L is greater than or equal to 1.

The number of operation command indexes included in the operation command index set is less than or equal to L.

In an embodiment, in the case where the operation command index set includes a single operation command index, the single operation command index corresponds to L second communication node identifications. That is, the operation command corresponding to the single operation command index is applied to the second communication nodes corresponding to the L second communication node identifications.

In an embodiment, in the case where the operation command index set includes L operation command indexes, the L operation command indexes correspond to L second communication node identifications, respectively. That is, in the operation commands corresponding to the L operation command indexes and the second communication nodes corresponding to the L second communication node identifications, each operation command is applied to one second communication node.

In an embodiment, the operation command corresponding to an operation command index may be a read information command, a write information command, or a paging command.

In an embodiment, in the case where the operation command index set includes a write information command index, the operation command index set includes a single operation command index, the single operation command index corresponds to the write information command, and the first multicast command also includes data domain information associated with the write information command.

In an embodiment, the first multicast command also includes an indication of the number of second communication node identifications. The indication of the number of second communication node identifications is used to indicate the number of second communication node identifications contained in the first multicast command.

In an embodiment, for L second communication node identifications and an operation command index set, each second communication node identification and each operation command index form a group of command combinations, and in the multicast command, the transmission order is the first group of command combinations to the L-th group of command combinations. Alternatively, for L second communication node identifications and an operation command index set, in the multicast command, the transmission order is L second communication node identifications and the operation command index set.

The present application also provides an information receiving method. The method includes the following: A second communication node receives a first multicast command.

The first multicast command includes a multicast command index, L second communication node identifications, and an operation command index set.

The second communication node may determine the first multicast command based on the multicast command index.

In an embodiment, in the case where the identification stored by the second communication node is the same as any second communication node identification contained in the first multicast command, the second communication node determines the corresponding operation command index based on the second communication node identification, that is, the second communication node determines the operation command for the second communication node.

In an embodiment, in the case where the identification stored by the second communication node is the same as any second communication node identification included in the first multicast command, if the operation command index set includes a single operation command index, the second communication node determines that the operation command index corresponding to the second communication node is a single operation command index; alternatively, if the operation command index set includes L operation command indexes and the identification of the second communication node is the i-th identification in the first multicast command, the second communication node determines that the operation command index corresponding to the second communication node is the i-th operation command index, where $1 \leq i \leq L$, or $0 \leq i \leq L - 1$.

In an embodiment, in the case where the identification stored by the second communication node is the same as any second communication node identification contained in the first multicast command, if the operation command index set includes a write information command index, the second communication node determines that the operation command index corresponding to the second communication node itself is a write information command index; the second communication node stores the data domain information associated with the write information command to the corresponding physical address.

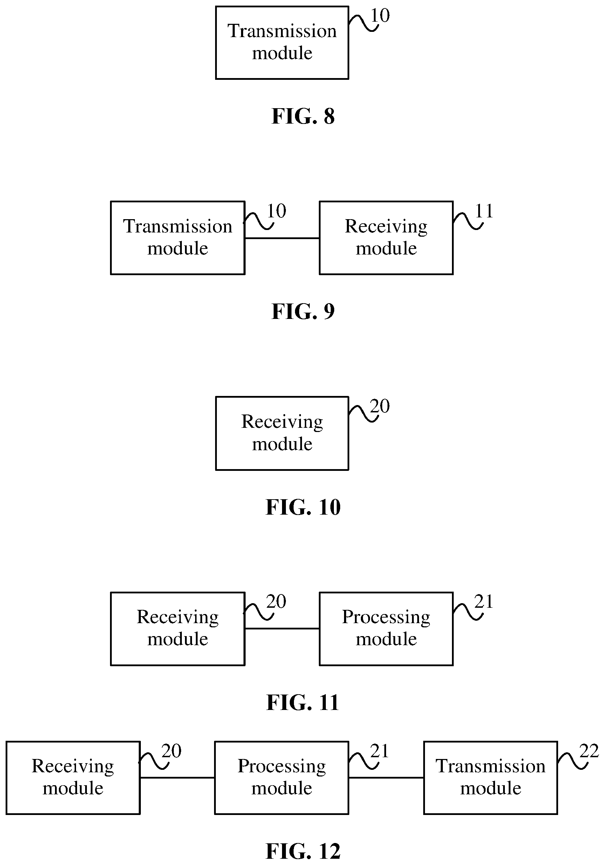

FIG. 8 is a diagram illustrating the structure of a command sending apparatus according to an embodiment. The apparatus may be configured in a first communication node. As shown in FIG. 8, the apparatus includes a transmission module 10.

The transmission module 10 is configured to send a first polling command or a second polling command, where the first polling command includes a first command index and a first polling parameter, the first polling parameter is configured for determining a first range of slot values, the second polling command includes a second command index and a second polling parameter, and the second polling parameter is configured for determining a second range of the slot values.

The command sending apparatus provided in this embodiment is configured to perform the command sending method in the embodiment shown in FIG. 2. The implementation principles and technical effects of the command sending apparatus provided by this embodiment are similar to those of the preceding embodiments and are not repeated herein.

In an embodiment, the first command index and the second command index are different from each other.

In an embodiment, the first polling command is a command sent periodically, and the transmission period of the first polling command is T.

In an embodiment, the duration corresponding to the first range of the slot values is less than or equal to T.

In an embodiment, the sum of the duration corresponding to the first range of the slot values and the duration corresponding to the second range of the slot values is less than or equal to T.

In an embodiment, in conjunction with FIG. 8, FIG. 9 is a diagram illustrating the structure of another command sending apparatus according to an embodiment. The apparatus also includes a receiving module 11.

The receiving module 11 is configured to receive reporting information sent by a second communication node, where the reporting information includes the identification of the second communication node and first data. The transmission module 10 is also configured to correctly decode the reporting information and send first response information to the second communication node, where the first response information includes at least one of correct decoding indication information, first command information, or the identification of the second communication node.

In an embodiment, the receiving module 11 is also configured to receive the identification of the second communication node sent by a second communication node; the transmission module 10 is also configured to correctly decode the identification of the second communication node and send acknowledgment information including the identification of the second communication node to the second communication node; the receiving module 11 is also configured to receive first data sent by the second communication node; the transmission module 10 is also configured to correctly decode the first data and send first response information to the second communication node, where the first response information includes at least one of correct decoding indication information, first command information, or the identification of the second communication node; in the case where the first data is not correctly decoded, second response information is sent to the second communication node, where the second response information includes at least one of an incorrect decoding indication, the identification of the second communication node, a retransmission indication, or retransmission control information.

In an embodiment, the transmission module 10 is also configured to send the first polling command; the receiving module 11 is also configured to receive the identification of the second communication node or reporting information sent by the second communication node, where the identification of the second communication node or the reporting information is not correctly decoded.

FIG. 10 is a diagram illustrating the structure of a command receiving apparatus according to an embodiment. The apparatus may be configured in a second communication node. As shown in FIG. 10, the apparatus includes a receiving module 20.

The receiving module 20 is configured to receive a first polling command or a second polling command sent by a first communication node, where the first polling command includes a first command index and a first polling parameter, the first polling parameter is configured for determining a first range of slot values, the second polling command includes a second command index and a second polling parameter, and the second polling parameter is configured for determining a second range of the slot values.

The command receiving apparatus provided in this embodiment is configured to perform the command receiving method in the embodiment shown in FIG. 3. The implementation principles and technical effects of the command receiving apparatus provided by this embodiment are similar to those of the preceding embodiments and are not repeated herein.

In an embodiment, in conjunction with FIG. 10, FIG. 11 is a diagram illustrating the structure of another command receiving apparatus according to an embodiment. The apparatus also includes a processing module 21.

The processing module 21 is configured for determining a first range of slot values according to a first coefficient and the first polling parameter; or the processing module 21 is configured for determining a second range of slot values according to the second polling parameter.

In an embodiment, the processing module 21 is configured for determining the maximum slot value S1 corresponding to the first polling parameter Q1; determine the first range of the slot values as 0 to $\lceil k \cdot S1 \rceil$ according to the first coefficient k and the maximum slot value S1, where $0 < k \leq 1$. Alternatively, the processing module 21 is configured for determining the maximum slot value $S1 = \lceil k \cdot 2^{Q1} \rceil - 1$ corresponding to the first polling parameter Q1 according to the first coefficient k and the first polling parameter Q1; determine the first range of the slot values being from 0 to S1, where $0 < k \leq 1$.

In an embodiment, the value of the first coefficient k is associated with n, n denotes the number of times the second communication node receives the first polling command to send a piece of reporting information or the identification of the second communication node, and $n \geq 1$; alternatively, the value of the first coefficient k is associated with the data volume of the first data; alternatively, the value of the first coefficient k is associated with the service type corresponding to first data; alternatively, the value of the first coefficient k is associated with whether the second communication node has an active reporting requirement; alternatively, the value of the first coefficient k is associated with mobility speed of the second communication node.

In an embodiment, in conjunction with FIG. 11, FIG. 12 is a diagram illustrating the structure of another command receiving apparatus according to an embodiment. The apparatus also includes a transmission module 22.

The transmission module 22 is configured to send the identification of the second communication node or reporting information to the first communication node, where the reporting information includes the identification of the second communication node and first data.

In an embodiment, the transmission module 22 is also configured to: after sending the reporting information to the first communication node, in the case where first response information including the identification of the second communication node is not received from the first communication node, but the second polling command is received from the first communication node, resend the reporting information based on the second polling command; alternatively, after sending the identification of the second communication node to the first communication node, in the case where acknowledgment information including the identification of the second communication node is not received from the first communication node, but the second polling command is received from the first communication node, resend the identification of the second communication node based on the second polling command.

In an embodiment, the transmission module 22 is also configured to: after sending the reporting information to the first communication node, in the case where first response information including the identification of the second communication node is not received from the first communication node and the second polling command is not received from the first communication node, resend the reporting information based on the first polling command after receiving a next first polling command sent by the first communication node; alternatively, after sending the identification of the second communication node to the first communication node, in the case where acknowledgment information including the identification of the second communication node is not received from the first communication node and the second polling command is not received from the first communication node, resend the identification of the second communication node based on the first polling command after receiving a next first polling command sent by the first communication node.

In an embodiment, the receiving module 20 is also configured to receive acknowledgment information including the identification of the second communication node from the first communication node; the transmission module 22 is also configured to send first data to the first communication node; receive second response information sent by the first communication node, and resend the first data after a delay value D starting from transmission end time of the second response information, where the second response information includes at least one of incorrect decoding indication information, the identification of the second communication node, a retransmission indication, or retransmission control information.

In an embodiment, for an ($m$ - 1)-th transmission failure of a piece of reporting information or the identification of the second communication node, the second communication node sends the reporting information or the identification of the second communication node based on the first polling command after receiving the first polling command for $m$-th time.

An embodiment of the present application also provides a communication node. The communication node includes a processor, which is configured to, when executing a computer program, perform the method provided in any embodiment of the present application. The communication node may be a first communication node or a second communication node. The first communication node includes a processor that, when executing a computer program, is used to implement the command sending method provided in any embodiment of the present application. The second communication node includes a processor that, when executing a computer program, is used to implement the command receiving method provided in any embodiment of the present application. Illustratively, the first communication node may be an access network device provided in any embodiment of the present application, such as a base station; the second communication node may be a terminal device provided in any embodiment of the present application, which is not specifically limited in the present application.

Illustratively, the following embodiments separately provide a diagram illustrating the structure of a communication node as a base station or as UE.

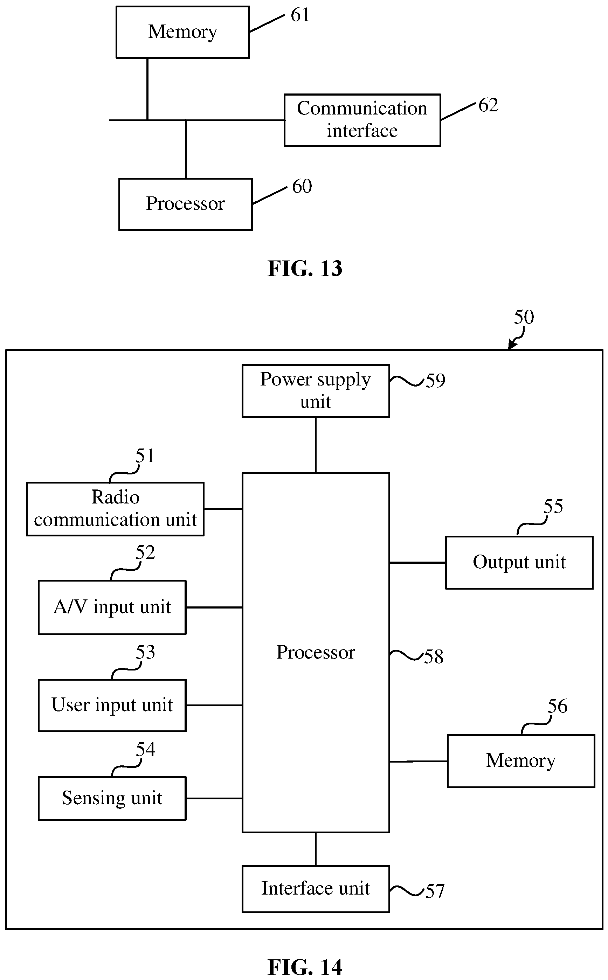

FIG. 13 is a diagram illustrating the structure of a base station according to an embodiment. As shown in FIG. 13, the base station includes a processor 60, a memory 61, and a communication interface 62. One or more processors 60 may be provided in the base station, and one processor 60 is used as an example in FIG. 13. The processor 60, the memory 61, and the communication interface 62 that are in the base station may be connected through a bus or in other manners. In FIG. 13, the connection through the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program commands/modules corresponding to the method in the embodiments of the present application. The processor 60 runs the software programs, commands, and modules stored in the memory 61 to execute at least one of function applications and data processing of the base station, that is, to implement the method described above.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed with respect to the processor 60. These remote memories may be connected to the base station via a network. Examples of the preceding network include but are not limited to, the Internet, an intranet, a network, a communication network, and a combination thereof.

The communication interface 62 may be configured to receive and send data.

FIG. 14 is a diagram illustrating the structure of a UE according to an embodiment. The UE may be implemented in multiple forms. The UE in the present application may include but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 14, a UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 14 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration, and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

An embodiment of the present application also provides a computer-readable storage medium. The computer-readable storage medium is configured to store a computer program that, when executed by a processor, implements the method provided by any one of the embodiments of the present application.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory, or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be of any type suitable to the local technical environment, such as, but is not limited to, a general purpose computer, a special purpose computer, a microprocessor, a digital signal processing (DSP), an application specific integrated circuit (ASIC), a field-programmable gate array (FPGA), and a processor based on a multi-core processor architecture.

## Claims

1. A command sending method, the method being applied to a first communication node and comprising:
   sending a first polling command or a second polling command, wherein the first polling command comprises a first command index and a first polling parameter, the first polling parameter is configured for determining a first range of slot values, the second polling command comprises a second command index and a second polling parameter, and the second polling parameter is configured for determining a second range of the slot values.

2. The method according to claim 1, wherein the first command index and the second command index are different from each other.

3. The method according to claim 1, wherein the first polling command is a command sent periodically, and a transmission period of the first polling command is T.

4. The method according to claim 3, wherein a duration corresponding to the first range of the slot values is less than or equal to T.

5. The method according to claim 3, wherein a sum of a duration corresponding to the first range of the slot values and a duration corresponding to the second range of the slot values is less than or equal to T.

6. The method according to claim 1, after sending the first polling command or the second polling command, further comprising:

   receiving reporting information sent by a second communication node, wherein the reporting information comprises an identification of the second communication node and first data; and
   in a case where the reporting information is correctly decoded, sending first response information to the second communication node, wherein the first response information comprises at least one of correct decoding indication information, first command information, or the identification of the second communication node.

7. The method according to claim 1, after sending the first polling command or the second polling command, further comprising:

   receiving an identification of the second communication node sent by the second communication node;
   in a case where the identification of the second communication node is correctly decoded, sending acknowledgment information including the identification of the second communication node to the second communication node;
   receiving first data sent by the second communication node;
   in a case where the first data is correctly decoded, sending first response information to the second communication node, wherein the first response information comprises at least one of correct decoding indication information, first command information, or the identification of the second communication node; and
   in a case where the first data is not correctly decoded, sending second response information to the second communication node, wherein the second response information comprises at least one of an incorrect decoding indication, the identification of the second communication node, a retransmission indication, or retransmission control information.

8. The method according to claim 1, before sending the second polling command to the second communication node, further comprising:

sending the first polling command; and receiving an identification of the second communication node or reporting information sent by the second communication node, wherein the identification of the second communication node or the reporting information is not correctly decoded.

9. A command receiving method, the method being applied to a second communication node and comprising:
receiving a first polling command or a second polling command sent by a first communication node, wherein the first polling command comprises a first command index and a first polling parameter, the first polling parameter is configured for determining a first range of slot values, the second polling command comprises a second command index and a second polling parameter, and the second polling parameter is configured for determining a second range of the slot values.

10. The method according to claim 9, further comprising:
determining the first range of the slot values according to a first coefficient and the first polling parameter;
or determining the second range of the slot values according to the second polling parameter.

11. The method according to claim 10, wherein determining the first range of the slot values according to the first coefficient and the first polling parameter comprises:

determining a maximum slot value S1 corresponding to the first polling parameter Q1; and
determining the first range of the slot values being from 0 to $\lceil k \cdot S1 \rceil$ according to the first coefficient k and the maximum slot value S1, wherein $0 < k \leq 1$;
or,
determining a maximum slot value $S1 = \lceil k \cdot 2^{Q1} \rceil - 1$ corresponding to the first polling parameter Q1 according to the first coefficient k and the first polling parameter Q1; and
determining the first range of the slot values being from 0 to S1, wherein $0 < k \leq 1$.

12. The method according to claim 11, wherein a value of the first coefficient k is associated with n, n denotes a number of times the second communication node receives the first polling command to send a piece of reporting information or the identification of the second communication node, and $n \geq 1$;

or, a value of k is associated with data volume of first data;
or, a value of k is associated with a service type corresponding to first data;
or, a value of k is associated with whether the second communication node has an active reporting requirement;
or, a value of k is associated with mobility speed of the second communication node.

13. The method according to claim 9, after receiving the first polling command or the second polling command sent by the first communication node, further comprising:
sending an identification of the second communication node or reporting information to the first communication node, wherein the reporting information comprises the identification of the second communication node and first data.

14. The method according to claim 13, further comprising:

after sending the reporting information to the first communication node, in a case where first response information including the identification of the second communication node is not received from the first communication node and the second polling command is received from the first communication node, resending the reporting information based on the second polling command;
or,
after sending the identification of the second communication node to the first communication node, in a case where acknowledgment information including the identification of the second communication node is not received from the first communication node and the second polling command is received from the first communication node, resending the identification of the second communication node based on the second polling command.

15. The method according to claim 13, after receiving the first polling command sent by the first communication node, further comprising:

after sending the reporting information to the first communication node, in a case where first response information including the identification of the second communication node is not received from the first communication node and the second polling command is not received from the first communication node, resending the reporting information based on the first polling command after receiving a next first polling command sent by the first communication node; or,

after sending the identification of the second communication node to the first communication node, in a case where acknowledgment information including the identification of the second communication node is not received from the first communication node and the second polling command is not received from the first communication node, resending the identification of the second communication node based on the first polling command after receiving a next first polling command sent by the first communication node.

16. The method according to claim 13, after sending the identification of the second communication node to the first communication node, further comprising:

receiving acknowledgment information including the identification of the second communication node from the first communication node; sending the first data to the first communication node; and receiving second response information sent by the first communication node, and resending the first data after a delay value D starting from transmission end time of the second response information, wherein the second response information comprises at least one of incorrect decoding indication information, the identification of the second communication node, a retransmission indication, or retransmission control information.

17. The method according to claim 13, wherein for an ($m$ - 1)-th transmission failure of a piece of reporting information or the identification of the second communication node, the second communication node sends the reporting information or the identification of the second communication node based on the first polling command after receiving the first polling command for $m$-th time.

18. A communication node, comprising a processor that is configured to, when executing a computer program, implement the command sending method according to any one of claims 1 to 8 or implement the command receiving method according to any one of claims 9 to 17.

19. A computer-readable storage medium storing a computer program that, when executed by a processor, implements the command sending method according to any one of claims 1 to 8 or implements the command receiving method according to any one of claims 9 to 17.

Wireless communication system

— 110 — 120

Terminal device — Access network device

— 130

Core network device

**FIG. 1**

Send a first polling command or a second polling command, where the first polling command includes a first command index and a first polling parameter, the first polling parameter is configured for determining the first range of slot values, the second polling command includes a second command index and a second polling parameter, and the second polling parameter is configured for determining the second range of the slot values

S110

**FIG. 2**

Receive a first polling command or a second polling command sent by a first communication node, where the first polling command includes a first command index and a first polling parameter, the first polling parameter is configured for determining the first range of slot values, the second polling command includes a second command index and a second polling parameter, and the second polling parameter is configured for determining the second range of the slot values

S210

**FIG. 3**

Base Station

UE

S301. Send a first polling command

S302. Receive the first polling command

S303. Determine the first range of the slot values according to a first coefficient and the first polling parameter

S304. Send reporting information according to the first range of the slot values

S305. Receive the reporting information

S306. If the reporting information is correctly decoded, send first response information

S307. Receive the first response information

S308. If the reporting information is not correctly decoded, send second response information

S309. Receive the second response information

S310. Resend the reporting information based on the first polling command after receiving the next first polling command sent by the base station

**FIG. 4**

| Base Station | | UE |
|---|---|---|

S401. Send a first polling command →

S402. Receive the first polling command

S403. Determine the first range of the slot values according to a first coefficient and the first polling parameter

← S404. Send the identification of the UE according to the first range of the slot values

S405. Receive the identification of the UE

S406. If the identification of the UE is correctly decoded, send acknowledgment information → including the identification of the UE

S407. Receive the acknowledgment information including the identification of the UE

← S408. If the identification stored by the UE is the same as the identification of the UE contained in the acknowledgment information, send first data

S409. Receive the first data

S410. If the first data is correctly decoded, → send first response information

S411. Receive the first response information

**FIG. 5**

```
┌──────────────┐                                          ┌──────────┐
│ Base Station │                                          │    UE    │
└──────────────┘                                          └──────────┘
```

S501. Send a first polling command →

S502. Receive the first polling command

S503. Determine the first range of the slot values according to a first coefficient and the first polling parameter

← S504. Send reporting information according to the first range of the slot values

S505. Receive the reporting information

S506. If the reporting information is correctly decoded, send first response information →

S507. Receive the first response information

S508. If the reporting information is not correctly decoded, send a second polling command →

S509. Receive the second polling command

← S509. Resend the reporting information based on the second polling command

← S510. Resend the reporting information based on the first polling command after the UE receives the next first polling command sent by the base station

FIG. 6

Base Station

UE

S601. Send a first polling command

S602. Receive the first polling command

S603. Determine the first range of the slot values according to a first coefficient and the first polling parameter

S604. Send the identification of the UE according to the first range of the slot values

S605. Receive the identification of the UE

S606. If the identification of the UE is correctly decoded, send acknowledgment information including the identification of the UE

S607. Receive the acknowledgment information including the identification of the UE

S608. If the identification stored by the UE is the same as the identification of the UE contained in the acknowledgment information, send first data

S609. Receive the first data

S610. If the first data is correctly decoded, send first response information

S611. Receive the first response information

**FIG. 7**

Transmission
module ⌇10

**FIG. 8**

Transmission
module ⌇10    Receiving
module ⌇11

**FIG. 9**

Receiving
module ⌇20

**FIG. 10**

Receiving
module ⌇20    Processing
module ⌇21

**FIG. 11**

Receiving
module ⌇20    Processing
module ⌇21    Transmission
module ⌇22

**FIG. 12**

Memory —— 61

Communication interface —— 62

Processor —— 60

**FIG. 13**

50

Power supply unit ⌇59

Radio communication unit 51

A/V input unit 52

User input unit 53

Sensing unit 54

Processor ⌇58

Output unit 55

Memory 56

Interface unit ⌇57

**FIG. 14**

## INTERNATIONAL SEARCH REPORT

| International application No. |
| --- |
| **PCT/CN2023/119810** |

### A. CLASSIFICATION OF SUBJECT MATTER

H04W4/30(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 轮询, 指令, 索引, 参数, 时隙, 取值, 范围, poll, instruction, index, parameter, slot, value, bound

### C. DOCUMENTS CONSIDERED TO BE RELEVANT

| Category* | Citation of document, with indication, where appropriate, of the relevant passages | Relevant to claim No. |
| --- | --- | --- |
| PX | CN 115884117 A (ZTE CORP.) 31 March 2023 (2023-03-31)<br>claims 1-19 | 1-19 |
| X | CN 101263661 A (SONY CORPORATION) 10 September 2008 (2008-09-10)<br>description, page 33, paragraph 3, page 34, paragraph 4 to page 37, paragraph 1, page 58, paragraph 3, and figure 19 | 1-19 |
| X | JP 2007043269 A (SONY CORP.) 15 February 2007 (2007-02-15)<br>description, paragraphs [0147]-[0148] | 1-19 |
| A | CN 101951281 A (SONY CORPORATION) 19 January 2011 (2011-01-19)<br>entire document | 1-19 |
| A | CN 101112010 A (SONY CORPORATION) 23 January 2008 (2008-01-23)<br>entire document | 1-19 |
| A | US 2013301605 A1 (NOKIA CORP.) 14 November 2013 (2013-11-14)<br>entire document | 1-19 |
| A | US 2018352581 A1 (MOBILICOM LTD.) 06 December 2018 (2018-12-06)<br>entire document | 1-19 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 December 2023** | **07 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/119810**

| Patent document cited in search report | | | Publication date (day/month/year) | Patent family member(s) | | | Publication date (day/month/year) |
|---|---|---|---|---|---|---|---|
| CN | 115884117 | A | 31 March 2023 | None | | | |
| CN | 101263661 | A | 10 September 2008 | KR | 20080038325 | A | 06 May 2008 |
| | | | | KR | 101214887 | B1 | 24 December 2012 |
| | | | | WO | 2007015430 | A1 | 08 February 2007 |
| | | | | US | 2011159816 | A1 | 30 June 2011 |
| | | | | US | 8515349 | B2 | 20 August 2013 |
| | | | | US | 2010105324 | A1 | 29 April 2010 |
| | | | | US | 7925215 | B2 | 12 April 2011 |
| | | | | EP | 1912339 | A1 | 16 April 2008 |
| | | | | JP | 2007041669 | A | 15 February 2007 |
| | | | | JP | 4378643 | B2 | 09 December 2009 |
| JP | 2007043269 | A | 15 February 2007 | JP | 4682735 | B2 | 11 May 2011 |
| CN | 101951281 | A | 19 January 2011 | KR | 20100086513 | A | 30 July 2010 |
| | | | | KR | 101055251 | B1 | 09 August 2011 |
| | | | | US | 2015319566 | A1 | 05 November 2015 |
| | | | | US | 9497588 | B2 | 15 November 2016 |
| | | | | HK | 1086118 | A1 | 08 September 2006 |
| | | | | US | 2017041047 | A1 | 09 February 2017 |
| | | | | US | 9831923 | B2 | 28 November 2017 |
| | | | | US | 2008126560 | A1 | 29 May 2008 |
| | | | | US | 8224243 | B2 | 17 July 2012 |
| | | | | US | 2013143492 | A1 | 06 June 2013 |
| | | | | US | 8942629 | B2 | 27 January 2015 |
| | | | | DE | 60333589 | D1 | 09 September 2010 |
| | | | | KR | 20110002499 | A | 07 January 2011 |
| | | | | KR | 101059139 | B1 | 25 August 2011 |
| | | | | US | 2015111497 | A1 | 23 April 2015 |
| | | | | US | 9106273 | B2 | 11 August 2015 |
| | | | | US | 2005077356 | A1 | 14 April 2005 |
| | | | | US | 7346061 | B2 | 18 March 2008 |
| | | | | EP | 2216914 | A2 | 11 August 2010 |
| | | | | EP | 2216914 | A3 | 03 November 2010 |
| | | | | EP | 2216914 | B1 | 09 May 2012 |
| | | | | US | 2012231735 | A1 | 13 September 2012 |
| | | | | US | 8417184 | B2 | 09 April 2013 |
| | | | | EP | 1575183 | A1 | 14 September 2005 |
| | | | | EP | 1575183 | A4 | 30 July 2008 |
| | | | | EP | 1575183 | B1 | 28 July 2010 |
| | | | | AU | 2003275696 | A1 | 09 July 2004 |
| | | | | JP | 2004215225 | A | 29 July 2004 |
| | | | | WO | 2004056005 | A1 | 01 July 2004 |
| | | | | KR | 20050083555 | A | 26 August 2005 |
| | | | | KR | 101014289 | B1 | 16 February 2011 |
| CN | 101112010 | A | 23 January 2008 | US | 2013267175 | A1 | 10 October 2013 |
| | | | | US | 8874033 | B2 | 28 October 2014 |
| | | | | WO | 2006080435 | A1 | 03 August 2006 |
| | | | | EP | 1845632 | A1 | 17 October 2007 |
| | | | | EP | 1845632 | A4 | 12 December 2012 |
| | | | | EP | 1845632 | B1 | 20 August 2014 |
| | | | | US | 2008299907 | A1 | 04 December 2008 |

Form PCT/ISA/210 (patent family annex) (July 2022)

INTERNATIONAL SEARCH REPORT
Information on patent family members

| International application No.<br>**PCT/CN2023/119810** | | | | |

| Patent document<br>cited in search report | Publication date<br>(day/month/year) | Patent family member(s) | | Publication date<br>(day/month/year) |
|---|---|---|---|---|
| | | US | 8515345 B2 | 20 August 2013 |
| | | JP | 2006211519 A | 10 August 2006 |
| | | JP | 4432787 B2 | 17 March 2010 |
| US 2013301605 A1 | 14 November 2013 | None | | |
| US 2018352581 A1 | 06 December 2018 | US | 10575339 B2 | 25 February 2020 |
| | | WO | 2017090048 A1 | 01 June 2017 |

Form PCT/ISA/210 (patent family annex) (July 2022)

28